# EUROPEAN PATENT APPLICATION

(11) **EP 2 141 395 A1**
(43) Date of publication of application: **06.01.2010**
(21) Application number: 09707141.9
(22) Date of filing: 12.01.2009
(51) Int. Cl.: F16K 31/04, F16K 31/52, F16K 5/12

(54) **VALVE CORE POSITION CONTROLLING DEVICE**

(30) Priority: 01.02.2008 CN 200820055319 U
(71) Applicant: Shanghai Moons' Electric Co., Ltd, Minbei Industrial Park Shanghai 201107 (CN)
(72) Inventor: ZHAI, Houquan, Shanghai 201107 (CN); WANG, Xiaodong, Shanghai 201107 (CN); JIN, Qionghua, Shanghai 201107 (CN); LI, Yunfeng, Shanghai 201107 (CN)
(74) Representative: Modiano, Micaela Nadia
(86) International application number: PCT/CN2009/070103
(87) International publication number: WO 2009/097761

(57) **Abstract**

The present invention discloses a position control device for a spool for controlling movement of a spool of a valve between a first position and a second position. The position control device comprises a driving cam driven by a motor and outputting rotation of a predetermined angle, the driving cam having a control profile which has at least one recess. A first on/off control component comprises a first revolving rack pivotable about a pivot point, which has a force receiving side and a press side. A first slide is provided on the force receiving side and pushes against the control profile of the driving cam so as to provide a revolving force to the first revolving rack. A first metal is provided on the press side and acts with the revolution of the revolving rack so as to contact or separate from a conductive piece in order to control a conductive path from a power end to a power input end of the motor.

## Description

### TECHNICAL FIELD

The present invention relates to a position control device, in particular to a position control device for a spool.

### BACKGROUND

In a position control device for a spool in the prior art, a motor transmits motive power to a driving cam by deceleration of a gear box. The driving cam drives an output cam to move up and down. The up and down motion of the output cam urges a spool coupled thereto to move, which functions to open and close the spool. This kind of position control device achieves this function by means of control of the position of the cam. When the output cam urges the spool to a maximum position, the motor is turned off by motion of a mechanism; and when the output cam is in a minimum position (in which the spool is closed), the motor is turned on by the motion of the mechanism.

The main problem suffered by the current position control device for a spool consists in low control precision and insufficient reliability. Therefore, it becomes a challenge to design a position control device for a spool which is precise and reliable.

### SUMMARY OF THE INVENTION

A technical problem to be solved by the present invention is to provide a position control device for a spool which controls accurately and reliably.

To solve the above said technical problem, the present invention provides a position control device for a spool, comprising:
a driving cam driven by a motor and outputting rotation of a predetermined angle, said driving cam having a control profile which has at least one recess;
a first on/off control component, comprising: a first revolving rack pivotable about a pivot point, which has a force receiving side and a press side; a first slide provided on said force receiving side, which pushes against the control profile of said driving cam so as to provide a revolving force to said first revolving rack; a first conductive piece electrically connected to a first power input end of said motor; a first metal contact piece electrically connected to a first power end, one end of which is provided on said press side and acts with the revolution of the revolving rack and the other end of which is opposite to said first conductive piece;
a second on/off control component, comprising: a second revolving rack pivotable about a pivot point, which has a force receiving side and a press side; a second slide provided on said force receiving side, which pushes against the control profile of said driving cam so as to provide a revolving force to said second revolving rack; a second conductive piece electrically connected to a second power input end of said motor; a second metal contact piece electrically connected to a second power end, one end of which is provided on said press side and acts with the revolution of said second revolving rack and the other end of which is opposite to said second conductive piece.

In the above-said position control device for a spool, said first on/off control component further comprises a first compression spring, which is provided between said first slide and the force receiving side of said first revolving rack. Moreover, said first on/off control component further comprises a first conductive spring, which is provided between and abuts against a plug piece corresponding to said first power end and said first metal contact piece.

In the above-said position control device for a spool, said second on/off control component further comprises a second compression spring, which is provided between said second slide and the force receiving side of said second revolving rack. Moreover, said second on/off control component further comprises a second conductive spring, which is provided between and abuts against a plug piece corresponding to said second power end and said second metal contact piece.

In the above-said position control device for a spool, said control profile has a first recess corresponding to said first slide and a second recess corresponding to said second slide, wherein a position in which said first slide falls into said first recess corresponds to a first position of said spool and a position in which said second slide falls into said second recess corresponds to a second position of said spool.

Due to the adoption of the above-said technical solution, when compared with the prior art, the present invention improves both of the control accuracy and reliability by means of the mechanical rotation action produced by the cooperation of the slide and the revolving rack.

### BRIER DESCRIPTION OF THE DRAWINGS

Further features and advantages of the present invention will be described in detail through the following embodiments and drawings thereof.
Fig. 1 is a side view of an internal structure of a position control device for a spool according to the present invention.
Fig. 2 is a front view of the position control device for a spool according to the present invention.
Fig. 3 is an explosive view for the components of the position control device for a spool according to the present invention.

### DETAILED DESCRIPTION OF THE INVENTION

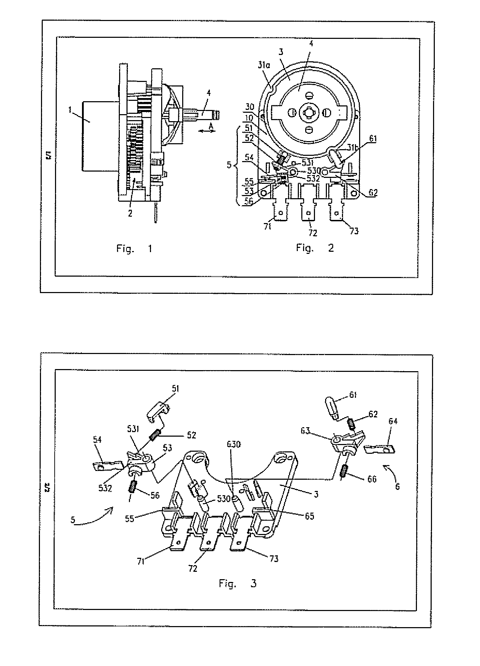

Referring to Fig.1, action of a spool of a valve (not shown) is driven by a motor 1, the output rotation of which, after being decelerated by a reducing box gear assembly 2, is transmitted to a driving cam 3 (see Fig.2), which in turn drives an output cam 4 to move up and down, i.e. to move axially as shown in the figure at A, so as to drive the spool to move between a first position (for example, a maximum position) and a second position (for example, a minimum position). When the spool is moved to the maximum position, the motor should be turned off to stop rotating such that the spool remains in the maximum position; similarly, when the spool is moved to the minimum position, the motor should also be turned off to stop rotating such that the spool remains in the minimum position. For this purpose, the following embodiment is a position control devices providing the above-said control.

Referring to Fig.2, the position control device according to an embodiment of the present invention comprises a support plate 10, on which a driving cam 3 is provided. The driving cam has a circular control profile 30 in which at least one recess (two recesses 31a, 31b are illustrated in Fig. 2) is provided. An on/off control component is provided on each of right and left sides below the driving cam 3, i.e. a first on/off control component 5 and a second on/off control component 6, respectively. For example, the first on/off control component 5 turns off the motor when the spool reaches the maximum position and the second on/off control component 6 turns off the motor when the spool reaches the minimum position.

Referring to Fig.3 in combination, the first on/off control component 5 comprises a first slide 51, a first compression spring 52, a first revolving rack 53, a first metal contact piece 54, a first conductive piece 55 and a first conductive spring 56. The first revolving rack 53 pivots about a pivot point 530 and comprises a force receiving side 531 and a press side 532. The first slide 51 is provided on the force receiving side 531 and the first compression spring 52 is arranged between the first slide 51 and the force receiving side 531. Further, a round contact head of the first slide 51 can slide in the control profile 30 of the driving cam 3 and fall into a recess 31. One end of the metal contact piece 54 is provided on the press side 532 and is connected, below the first metal contact piece 54 and via the first conductive spring 56, to a plug piece 71, which corresponds to a first power end (not shown in Figures). And the other end of the first metal contact piece 54 is opposite to the first conductive piece 55, which is electrically connected to a first power input end of the motor 1.

The second on/off control component 6 comprises a second slide 61, a second compression spring 62, a second revolving rack 63, a second metal contact piece 64, a second conductive piece 65 and a second conductive spring 66. It has an arrangement similar to that of the first on/off control component and thus its detailed description is omitted herein.

Further, among the three plug pieces shown in Fig.2, the plug piece 72 is a common plug piece, which remains electrical connection with the motor 1; the plug piece 71 causes the motor (and thus the driving cam 3) to rotate clockwise when it is energized and the plug piece 73 causes the motor (and thus the driving cam 3) to rotate counterclockwise when it is energized.

Operational principle of the control device of the present invention will be described below through the embodiment of Fig.2 by way of example.

When the slide 61 is situated in a recess 31b of the driving cam, the output cam 4 urges the spool (not shown) to the minimum position, in which case the plug piece 71 is deenergized while the plug piece 73 is energized, the second metal contact piece 64 not contacting the second conductive piece 65, the motor not rotating and the spool retaining in the minimum position.

Then, the plug piece 71 is energized while the plug piece 73 is deenergized. Since the first slide 51 is not in any recess of the control profile 30, the pressure provided by it is transmitted via the revolving rack 53 to the first metal contact piece 54 such that it is caused to contact the first conductive piece 55. In this way, the two power input end of the motor 1 connect the contact pieces 71 and 72, respectively, so as to rotate the motor clockwise until the first slide 51 falls into the recess 31a and the driving cam 3 brings the spool into the maximum position. Then, the first revolving rack 53 is revolved by the conductive spring and the pressure spring and brings the first metal contact piece 54 away from the first metal conductive piece 55 such that the motor 1 stops rotating and the spool remains in the maximum position.

Then, the plug piece 71 is deenergized while the plug piece 73 is energized. Since the second slide 61 is not in any recess of the control profile 30, the pressure provided by it is transmitted via the second revolving rack 63 to the second metal contact piece 64 such that it is caused to contact the second conductive piece 65. In this way, the two power input end of the motor 1 connect the contact pieces 72 and 73, respectively, so as to rotate the motor counterclockwise until the second slide 61 falls into the recess 31 b, i.e. returns into the state shown in Fig.2. The operation is thus repeated circularly.

It should be noted that though the above embodiments are described with regard to an on/off control mechanism having a control profile with two recesses in combination with specific plug pieces to perform the on/off control, by way of example, it is not intended to limit the present invention thereto. The characterized feature of the present invention consists in the improved design for the control profile or on/off mode so as to improve the accuracy and the reliability. Any modification to the control profile and the on/off mode based on the same falls into the scope of the present invention.

### INDUSTRIAL APPLICABILITY

The position control device for a spool of the present invention realizes the purpose of on/off position control by means of on/off switching of the power. Compared with the prior art products, the present invention can response accurately and reliably by means of the mechanical rotation action caused by the cooperation of the slide and the revolving rack, and the actual travel of the slide is longer than the effective travel of the metal contact piece, producing an elastic force buffering effect, which ensures the reliability of the device.

## Claims

1. A position control device for a spool for controlling movement of a spool of a valve between a first position and a second position, being **characterized in that** the position control device comprises:
a driving cam driven by a motor and outputting rotation of a predetermined angle, said driving cam having a control profile which has at least one recess;
a first on/off control component, comprising: a first revolving rack pivotable about a pivot point, which has a force receiving side and a press side; a first slide provided on said force receiving side, which pushes against the control profile of said driving cam so as to provide a revolving force to said first revolving rack; a first conductive piece electrically connected to a first power input end of said motor; a first metal contact piece electrically connected to a first power end, one end of which is provided on said press side and acts with the revolution of the first revolving rack and the other end of which is opposite to said first conductive piece;
a second on/off control component, comprising: a second revolving rack pivotable about a pivot point, which has a force receiving side and a press side; a second slide provided on said force receiving side, which pushes against the control profile of said driving cam so as to provide a revolving force to said second revolving rack; a second conductive piece electrically connected to a second power input end of said motor; a second metal contact piece electrically connected to a second power end, one end of which is provided on said press side and acts with the revolution of said second revolving rack and the other end of which is opposite to said second conductive piece.

2. The position control device for a spool according to claim 1, being **characterized in that** said first on/off control component further comprises a first compression spring, which is provided between said first slide and the force receiving side of said first revolving rack.

3. The position control device for a spool according to claim 1, being **characterized in that** said first on/off control component further comprises a first conductive spring, which is provided between and abuts against a plug piece corresponding to said first power end and said first metal contact piece.

4. The position control device for a spool according to claim 1, being **characterized in that** said second on/off control component further comprises a second compression spring, which is provided between said second slide and the force receiving side of said second revolving rack.

5. The position control device for a spool according to claim 1, being **characterized in that** said second on/off control component further comprises a second conductive spring, which is provided between and abuts against a plug piece corresponding to said second power end and said second metal contact piece.

6. The position control device for a spool according to claim 1, being **characterized in that** said control profile has a first recess corresponding to said first slide and a second recess corresponding to said second slide, wherein a position in which said first slide falls into said first recess corresponds to a first position of said spool and a position in which said second slide falls into said second recess corresponds to a second position of said spool.
